# EUROPEAN PATENT APPLICATION

(11) **EP 3 364 410 A1**
(43) Date of publication of application: **22.08.2018**
(21) Application number: 17157093.0
(22) Date of filing: 21.02.2017
(51) Int. Cl.: G10L 15/28, H01R 13/66

(54) **SYSTEM AND METHOD FOR VOICE RECOGNITION**

(71) Applicant: Advanced Digital Broadcast S.A., 1292 Geneva (CH)
(72) Inventor: Cichonski, Dariusz, 65-119 Zielona Gora (PL)
(74) Representative: Blonski, Pawel

(57) **Abstract**

A voice recognition system comprising: A wall outlet (100A-D) comprising: at least one built-in microphone (108); an antenna (107) configured to transmit an audio signal captured by said microphone (108); an internal controller (210) configured to capture audio signals and transmit these signals to a pre-configured receiver (300). A corresponding voice recognition method is also provided.

## Description

### TECHNICAL FIELD

The present invention relates to a system and method for voice recognition. In particular the present invention relates to a voice data signal recording device and to method for obtaining voice data from a plurality of such devices and identifying the best signal source.

### BACKGROUND OF THE INVENTION

Prior art defines voice recognition, which can refer to speaker recognition i.e. determining who is speaking or speech recognition i.e. determining what is being said.

Speech recognition (SR) is the inter-disciplinary sub-field of computational linguistics that develops methodologies and technologies that enables the recognition and translation of spoken language into text by computers. It is also known as "automatic speech recognition" (ASR), "computer speech recognition", or just "speech to text" (STT). It incorporates knowledge and research in the linguistics, computer science, and electrical engineering fields (source: Wikipedia).

Speech recognition applications include voice user interfaces such as voice dialing, call routing, domotic appliance control, search, simple data entry (e.g., entering a credit card number), preparation of structured documents (e.g. a radiology report), speech-to-text processing (e.g., word processors or emails), and aircraft (usually termed Direct Voice Input).

Typically, voice data are recorded using a single microphone, which is inefficient, especially in large rooms or when a person talks while moving.

Prior art discloses US20150003627A1 entitled "Steerable sensor array system with video input" wherein a beam of an array microphone may be automatically steered if faces within the field of view move. For example, motion tracking software hosted by the processor receives/captures left/right (L/R) directional information. The processor sends this horizontal directional information to the beam steering interface of the array microphone function driver to create a video reference signal (video ref) or object tracking reference signal. Therefore, the array microphone sensitivity "beam" will be guided by the video of signal/object tracking reference signal and follow the direction of the moving person/target in front of the camera. For example, facial recognition software such as used in digital camera technology may be used. For example, one or two faces in the field of view may provide an alert to widen the beam formed by the microphones to pick up the input from the identified faces or as the faces move. Such beams may be partially or wholly adjusted automatically based on location of the sound source and/or the video identification of a face or faces or it may provide only an alert that the beam should be widened manually.

This system is very complex and expensive as it requires a camera, video processing system, multi-face recognition system, an adjustable microphone array.

It would be advantageous to present a voice recording and processing method and system that would be more suited for application in larger rooms and at times when a person talks while moving while also being simple and cost effective.

The aim of the development of the present invention is an improved and cost effective method and apparatus for voice recognition.

### SUMMARY AND OBJECTS OF THE PRESENT INVENTION

An object of the present invention is a voice recognition system comprising: A wall outlet comprising: at least one built-in microphone; an antenna configured to transmit an audio signal captured by said microphone; an internal controller configured to capture audio signals and transmit these signals to a pre-configured receiver.

Preferably, more than one microphone are present.

Preferably, the system further comprises a switch of the microphone in order to switch the microphone between on and off state.

Preferably, the recorder audio is passed to an amplifier as well as a band-pass filter.

Preferably, the system comprises at least two wall outlets.

Preferably, the pre-configured receiver is configured to receive audio data from the at least two wall outlets.

Preferably, the pre-configured receiver comprises a Manager of Voice and Audio Stream Collectionconfigured to select, from a plurality of audio data streams received from the at least two wall outlets, the one with the best quality.

Preferably, said quality measure is selected from a group comprising: signal to noise level, echo level, interference level.

Preferably, the pre-configured receiver comprises a Voice and Audio Recognition Unit configured to recognize the meaning of the selected audio.

Another object of the present invention is a method for voice recognition, using at least two devices according to the present invention, the method being characterized in that it comprises: establishing communication between said devices and a receiver; providing a digitized audio signal, for each of said devices, to an audio processor; classifying said digitized audio, by said audio processor, into audio content categories and transmitting said digitized audio to the receiver; identifying, by said receiver, the best audio data stream for a particular sound; detecting said sound from said best audio data stream; and transmitting said detected sound to an intended receiver for execution.

Preferably, said audio content categories include at least one of the following: environmental sound, speech, music, cry.

Preferably, said intended receiver is the receiver or another receiver communicatively coupled with the receiver.

Preferably, said best audio data stream is selected based on a quality measure selected from a group comprising: signal to noise level, echo level, interference level.

### BRIEF DESCRIPTION OF THE DRAWINGS

These and other objects of the invention presented herein, are accomplished by providing a system and method for voice recognition. Further details and features of the present invention, its nature and various advantages will become more apparent from the following detailed description of the preferred embodiments shown in a drawing, in which:
Figs. 1A-D present various of embodiments of a wall outlet according to the present invention;
Fig. 2 presents a block diagram of the controller and electronic system present in the wall outlet unit according to the present invention;
Fig. 3 presents an example of a receiver configured to receive audio data from at least two wall-mounted units;
Fig. 4 presents and overview of the complete system according to the present invention; and
Fig. 5 shows a method according to the present invention.

### NOTATION AND NOMENCLATURE

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer's registers and memories into other data similarly represented as physical quantities within the memories or registers or other such information storage.

A computer-readable (storage) medium, such as referred to herein, typically may be non-transitory and/or comprise a non-transitory device. In this context, a non-transitory storage medium may include a device that may be tangible, meaning that the device has a concrete physical form, although the device may change its physical state. Thus, for example, non-transitory refers to a device remaining tangible despite a change in state.

As utilized herein, the term "example" means serving as a non-limiting example, instance, or illustration. As utilized herein, the terms "for example" and "e.g." introduce a list of one or more non-limiting examples, instances, or illustrations.

### DESCRIPTION OF EMBODIMENTS

According to the present invention a wall outlet, connected to an electrical system of a premise, such as a wall power socket, a wall power socket splitter, a wall power outlet, a wall-mounted electrical cable socket, a light bulb socket, a wall-mounted electrical switch, a wall-mounted electrical wall dimmer or the like comprises a microphone.

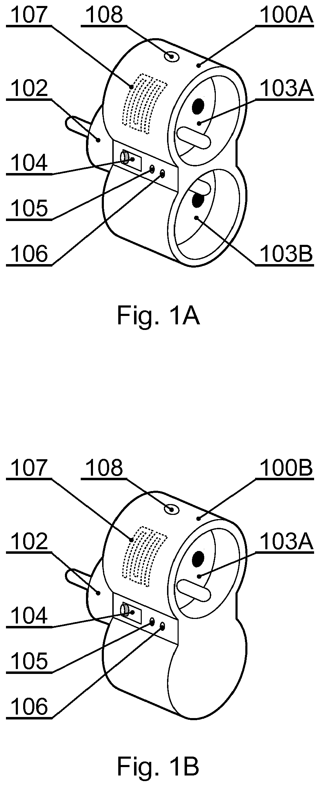

Figs. 1A-D present diagrams of the system according to the present invention in different casings. The common feature of all embodiments of Fig. 1A-D is that all casings are wall outlets casings, preferably to be mounted in a connection box.

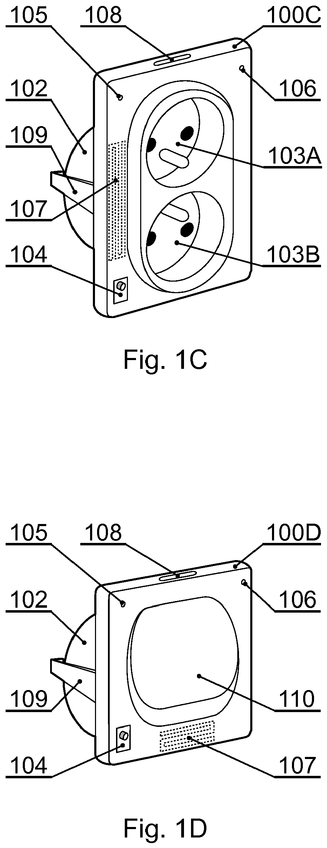

Fig. 1 presents a diagram of a wall power socket splitter according to the present invention. The wall outlet 100A-B comprises a plug 102 and two outlets 103A-B. It operates as a normal wall power socket splitter but has a built-in microphone 108 (at least one), a switch 104 of the microphone in order to optionally switch in on/off and an antenna 107 configured to transmit captured audio signal. Optionally wired transmission means may be utilized for said transmission, such as a wired connection e.g. Ethernet or power line communication (PLC). Optionally one or more indicators such as diodes 105 - 106 may signal different states of the system. An internal controller of the wall outlet 100A-B is configured to capture audio signals and transmit these signals to a pre-configured receiver (for example a home automation central station).

In addition, variants shown in Fig. 1C and Fig. 1D present a wall power outlet and a wall-mounted electrical switch respectively. All these items comprise modules 102, 104, 105, 106, 107 and 108.

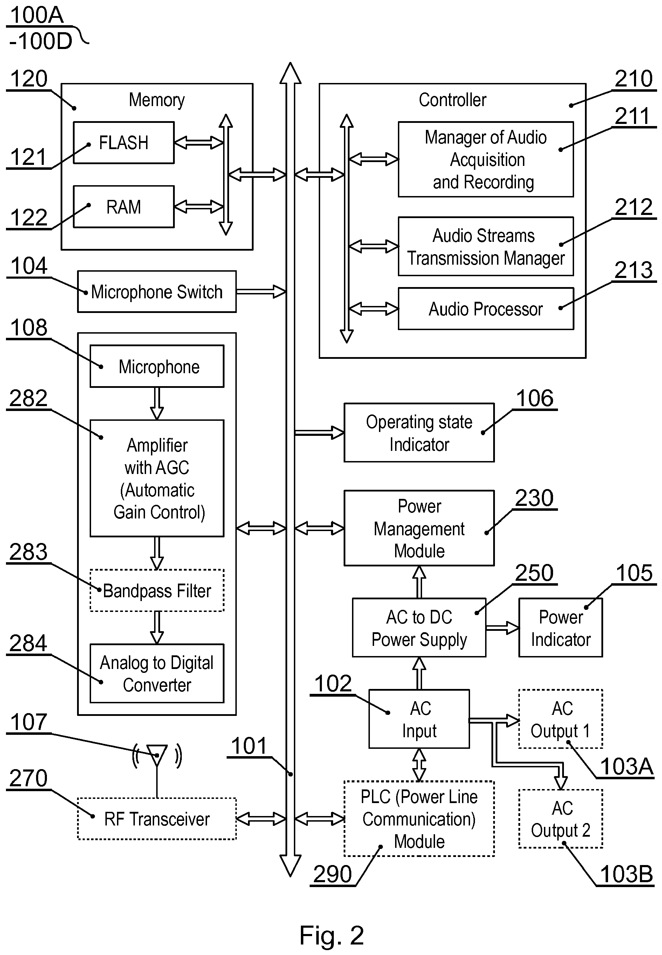

Fig. 2 presents more details of the internal controller and electronic system present in the wall outlet 100A-D. The system may comprise at least RAM memory 122 for temporarily storing recorded audio prior to its processing and transmitting to the receiver. Optionally, other types of memory may be present such as Flash 121 for storing data and software.

The system is connected, as required, to the microphone switch 104, operating state indicator 106, power indicator 105. In some embodiments the system may comprise an AC/DC power supply 250 and a power management module 230 responsible for supplying appropriate power to the modules of the system.

Further, the system comprises at least one microphone 108 that may cooperate with an amplifier 282 as well as a band-pass filter 283.

It is herein assumed that human speech spans over a frequency band 300-3400 Hz. The same or similar bandwidth is used in telecommunication. Nevertheless, humans hear within a typical band of 20 Hz-20 kHz.

Bandwidth limitation aims at eliminating redundant information as well as removal of distortions present in frequencies outside of the bandwidth of interest.

To this end said band-pass filter 283 may have adjustable range, for example from 20 ... 300 Hz to 2 kHz ... 20 kHz.

Lastly, the acquired audio signal may be subject to digitization by a suitable analog to digital converter 284.

In order to provide the recorded audio to a receiver for processing, the system may comprise a communication means 290, 270 such as an RF transceiver 270 (such as Wi-Fi, Bluetooth or the like). Alternatively, the system may be configured to use power line communication 290 or a wired local area network communication. Said communication means 290, 270 may be only a transmitter or a transceiver. In some embodiments both the RF transceiver 270 and the PLC module 290 may be present.

The wall outlet 100A-D may have an optional capability, using the RF transceiver 270, to communicate with other wall outlet(s) by creating a "mesh" network. These are self-organizing networks wherein each network element may be used as an intermediary node transmitting data from a one device to another device. This approach may solve a coverage problem by providing improved coverage of an area in which there are present devices forming said mesh network.

The modules of the system may communicate among each other with a use of a bus 101 such as an Internal Data Bus or an Internal Interconnect Bus or similar. A controller 210 is connected to said bus 101 in order to manage the system while comprising a Manager of Audio Acquisition and Recording 211 responsible for configuring the microphone, processing input audio data, storing said data and other processes as required by state of the art audio acquisition and storage (including possible encoding to different audio formats).

An Audio Streams Transmission Manager 212 is configured to manage transmission to a receiver 300 (The receiver 300 may be a Voice-Activated-and-Controlled Device). Additionally, an Audio Processor (213), may be applied in case there is more than one microphone per wall outlet. In certain embodiments, the wall outlet 100A-D may comprise more than one microphone in order to allow spatial positioning of a received audio signal and/or increasing an amplitude of the audio signal by shifting one of the recorded audio signals and adding it to another audio signal (covering the same audio event(s) but recorded by a different microphone).

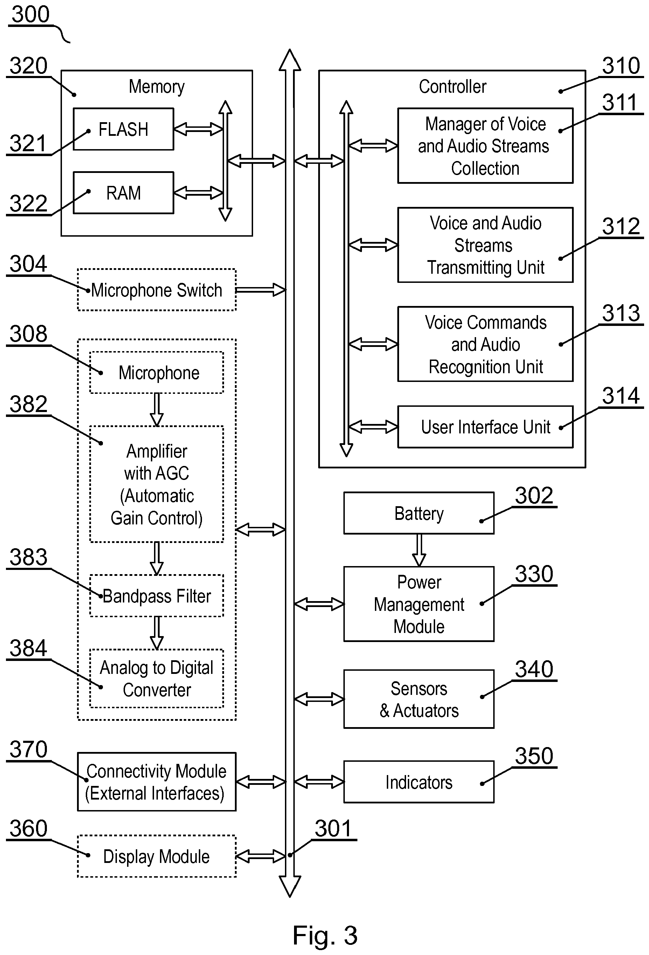

Fig. 3 presents an example of a receiver 300 configured to receive audio data from at least two wall outlet units 100A-D. The receiver 300 may comprise at least a RAM memory 322 for temporarily storing recorded audio prior to its processing as well as any data required for software execution. Optionally, other types of memory may be present such as Flash 321 for storing data and software.

Further, the receiver 300 may comprise at least one microphone 308 that may cooperate with an amplifier 382 as well as a band-pass filter 383 (the parameters of the filter may be that same as in case of the filter 283). Lastly, the acquired audio signal may be subject to digitization by a suitable analog to digital converter 384. These parts of the system may be optional in order to allow the receiver to also record audio.

A connectivity module 370 is responsible for communicating with the wall outlet devices 100A-D and at least reception of audio data irrespective of a particular communication method, which may for example be Wi-Fi, Bluetooth, ZigBee, PLC or the like.

It is clear to one skilled in the art that a power source, such as a battery 302, may be available to the receiver 300, which may also be managed by a suitable power management module 330. Additionally, sensors and actuators may be available at the receiver 300. Such sensors may be a gyroscope, accelerator, camera or the like. Sensors may cooperate with indicators 350 which may alternatively indicate operating states of the receiver 300.

The receiver 300 may comprise or be connected to a display wherein such connection as well as content transmitted over this connection is managed by a display module 360, such as a HDMI controller or internal display controller.

The modules of the system may communicate among each other with a use of an Internal Data Bus or an Internal Interconnect Bus 301. A controller 310 is connected to said bus 301 in order to manage the system while comprising a Manager of Voice and Audio Stream Collection 311 configured to select, from a plurality of audio data streams, the one with the best quality. Criteria of judging quality may be numerous, for example at least one of criteria selected from a group comprising: signal to noise level, echo level, interference level and the like.

A Voice and Audio Streams Transmitting Unit 312 may be used in case there is a need to transmit an audio stream to an external audio recognition system or to an external recipient of the recognized audio command. For example, a recognized voice command may select a particular receiver device such as a television set or a window shade or similar.

An audio data stream selected as having the best available quality may be sent to a Voice Commands and Audio Recognition Unit 313. This module may locally analyze and/or recognize the meaning of the selected audio data streams and execute associated commands. Alternatively, the audio data stream may be transmitted to an external Voice Commands Recognition Service 430 available over a network 410 and 420.

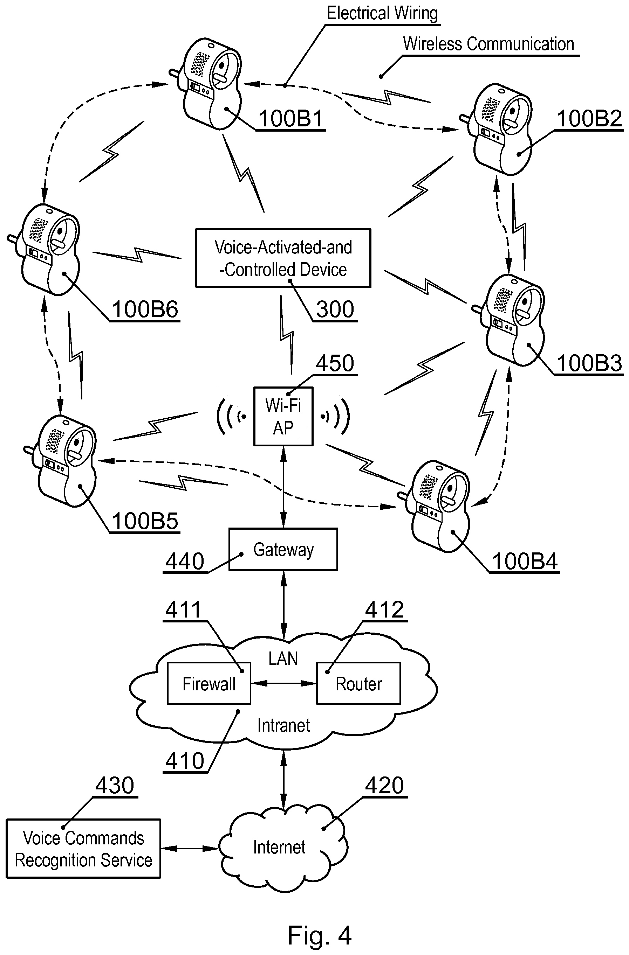

Fig. 4 presents and overview of the complete system according to the present invention. The system comprises an electrical installation wiring of a premise, two or more wall-mounted units 100B1-110B6 a communication means and the receiver 300, which is voice activated and controlled. The receiver 300 may use an external Voice Commands Recognition Service available over a network 410, 420 communication.

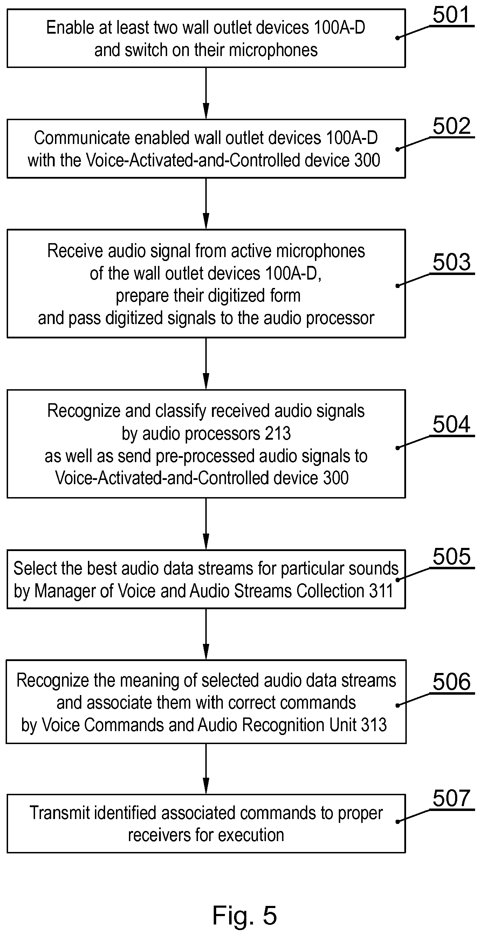

Fig. 5 presents a method for voice recognition according to the present invention. At step 501 there are provided at least two wall outlet devices 100A-D, which communicate 502, by means of modules (270, 290), with the voice activated and controlled receiver 300 and optionally with each other. The at least two wall outlet devices 100A-D are enabled and have their microphones switched on.

The receiver 300, may assign an identifier to each wall outlet device 100A-D in order to easily distinguish between said devices. As another option the receiver 300 may establish communication with the external Voice Commands Recognition Service 430.

The active microphones start to receive audio 503 signal so that the amplifier 282 may prepare signal for the A/D converter 284. A digitized signal is passed to the audio processor 213, which may adjust the band pass filter 283. Additionally, the audio processor 213 may add signals originating from more than one microphone in case the wall outlet device 100A-D is equipped with more than one microphone.

Another function, implemented by the audio processor 213, is classification 504 of the received audio into audio content categories e.g. environmental sound, speech, music, cry and similar. A suitable audio recognition method may be implemented in hardware or software stored in the device's memory.

A pre-processed audio signal is passed to the receiver 300 using an available communication link. The receiver 300 may request the wall outlets 100A-D to report only certain kind(s) of audio, for example speech in general, which may limit the required bandwidth.

Similarly, the receiver 300 may also record and process audio by using its microphone and modules presented with reference to Fig. 3.

Once the Manager of Voice and Audio Streams Collection 311 has identified the best audio data stream for a particular sound or utterance 505 and the sound has been detected/recognized 506 from said best audio data stream, the identified associated command is transmitted 507 to an intended receiver for execution. The intended receiver may be any device receiving such commands being the receiver 300 or another receiver communicatively coupled with the receiver 300.

At least parts of the methods according to the invention may be computer implemented. Accordingly, the present invention may take the form of an entirely hardware embodiment, an entirely software embodiment (including firmware, resident software, micro-code, etc.) or an embodiment combining software and hardware aspects that may all generally be referred to herein as a "circuit", "module" or "system".

Furthermore, the present invention may take the form of a computer program product embodied in any tangible medium of expression having computer usable program code embodied in the medium.

It can be easily recognized, by one skilled in the art, that the aforementioned method for voice recognition may be performed and/or controlled by one or more computer programs. Such computer programs are typically executed by utilizing the computing resources in a computing device. Applications are stored on a non-transitory medium. An example of a non-transitory medium is a non-volatile memory, for example a flash memory while an example of a volatile memory is RAM. The computer instructions are executed by a processor. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

## Claims

1. A voice recognition system comprising:
• A wall outlet (100A-D) comprising:
∘ at least one built-in microphone (108);
∘ an antenna (107) configured to transmit an audio signal captured by said microphone (108);
∘ an internal controller (210) configured to capture audio signals and transmit these signals to a pre-configured receiver (300).

2. The voice recognition system according to claim 1 wherein more than one microphone (108) are present.

3. The voice recognition system according to claim 1 further comprising a switch (104) of the microphone (108) in order to switch the microphone (108) between on and off state.

4. The voice recognition system according to claim 1 wherein the recorder audio is passed to an amplifier (282) as well as a band-pass filter (283).

5. The voice recognition system according to claim 1 wherein the system comprises at least two wall outlets (100A-D).

6. The voice recognition system according to claim 5 wherein the pre-configured receiver (300) is configured to receive audio data from the at least two wall outlets (100A-D).

7. The voice recognition system according to claim 6 wherein the pre-configured receiver (300) comprises a Manager of Voice and Audio Stream Collection (311) configured to select, from a plurality of audio data streams received from the at least two wall outlets (100A-D), the one with the best quality.

8. The voice recognition system according to claim 6 wherein said quality measure is selected from a group comprising: signal to noise level, echo level, interference level.

9. The voice recognition system according to claim 6 wherein the pre-configured receiver (300) comprises a Voice and Audio Recognition Unit (313) configured to recognize the meaning of the selected audio.

10. A method for voice recognition, using (501) at least two devices (100A-D) according to claim 1, the method being **characterized in that** it comprises:
• establishing communication (502) between said devices (100A-D) and a receiver (300);
• providing (503) a digitized audio signal, for each of said devices (100A-D), to an audio processor (213);
• classifying (504) said digitized audio, by said audio processor (213), into audio content categories and transmitting said digitized audio to the receiver (300);
• identifying, by said receiver (300), the best audio data stream for a particular sound (505);
• detecting said sound (506) from said best audio data stream; and
• transmitting (507) said detected sound to an intended receiver for execution.

11. The method according to claim 10 wherein said audio content categories include at least one of the following: environmental sound, speech, music, cry.

12. The method according to claim 10 wherein said intended receiver is the receiver (300) or another receiver communicatively coupled with the receiver (300).

13. The method according to claim 10 wherein said best audio data stream is selected based on a quality measure selected from a group comprising: signal to noise level, echo level, interference level.
